# EUROPÄISCHE PATENTSCHRIFT

(11) **EP 1 886 873 B1**
(45) Veröffentlichungstag und Bekanntmachung des Hinweises auf die Patenterteilung: **22.12.2010**
(21) Anmeldenummer: 07114018.0
(22) Anmeldetag: 08.08.2007
(51) Int. Cl.: B60R 1/06, B60R 1/076, E05D 11/10, F16D 71/04

(54) **Rastgelenk und Außenspiegel mit einem solchen Rastgelenk**
Retention hinge connection and exterior rear view mirror with such a retention hinge
Articulation à verrouillage et rétroviseur comprenant une telle articulation à verrouillage

(30) Priorität: 09.08.2006 DE 102006037218
(43) Veröffentlichungstag der Anmeldung: 13.02.2008
(73) Patentinhaber: MEKRA Lang GmbH & Co. KG, 90765 Fürth (DE)
(72) Erfinder: Centmayer, Stefan, 91465 Ergersheim (DE); Heger, Sebastian, 91438 Bad Windsheim (DE); Lang, Werner, 91465 Ergersheim (DE)
(74) Vertreter: Winter, Brandl, Fürniss, Hübner, Röss, Kaiser, Polte - Partnerschaft

(56) Entgegenhaltungen:
- EP-A1- 0 527 455
- FR-A3- 2 449 557
- GB-A- 658 679

## Beschreibung

Die Erfindung betrifft ein Rastgelenk nach dem Oberbegriff des Anspruch 1 sowie einen Außenspiegel für Fahrzeuge nach Anspruch 15 mit einem solchen Rastgelenk.

Rastgelenke werden in vielfältiger Ausprägung zur schwenkbaren Befestigung von Rückspiegeln an Fahrzeugen eingesetzt. In der einfachsten Ausgestaltung umfasst ein solches Rastgelenk einen ersten und einen zweiten Rastarm, die in identischen Rastkörpern enden. Die Rastkörper weisen kreisringförmige Rastflächen auf, die einander zugewandt sind und über eine die beiden Rastkörper durchdringende Schraube mit Feder werden die beiden Rastarme bzw. die beiden Rastkörper auf Pressung gegeneinander verspannt. Nachteilig bei diesem bekannten Rastgelenk ist es, dass hinsichtlich des Designs keinerlei Flexibilität besteht. Darüber hinaus sind solche Rastgelenke vergleichsweise groß und zeichnen sich auch durch ein hohes Gewicht aus. Die beiden Rastarme erstrecken sich in etwa 180°-Winkel von einander weg.

Darüber hinaus ist auch ein Rastgelenk für Fahrzeugaußenspiegel bekannt, bei dem der erste Rastarme durch einen Spiegelfuß gebildet wird, der mit dem Fahrzeug verbunden ist. Auf dem ersten Rastarm ist eine sich in horizontaler Richtung erstreckender erster Rastkörper vorgesehen. Auf diesem ersten Rastkörper ist ein zweiter Rastkörper eines zweiten Rastarms in Form eines Rohres angeordnet. Die beiden Rastkörper sind wieder über eine sich im wesentlichen senkrecht erstreckende Schraube mit Feder miteinander verbunden und gegeneinander verspannt. Der rohrförmige Rastarm erstreckt sich in etwa im rechten Winkel zu der Schraubachse weg. Auch dieses bekannte Rastgelenk zeichnet sich durch eine vergleichsweise große Bauweise und die Notwendigkeit einer eigenen Federabdeckung der Rastachse aus.

Aus FR 2 449557 A3 ist ein Rastgelenk mit zwei Rastelementen bekannt. Diese werden über eine Zugfeder verspannt.

Aus der EP 0 527 455 B1 und der gattungsbildenden GB 658,679 A ist ein Rastgelenk für die Halterung eines Außenspiegels an Nutzfahrzeugen bekannt. Dieses Rastgelenk umfasst einen ersten und einen zweiten Rastarm, die um eine Rastgelenkachse verschwenkbar zueinander angeordnet sind. Der zweite Rastarm umfasst einen Lagerbock, der von einem Gelenkachsenbauteil mit Bolzen und Spiraldruckfeder durchsetzt wird. Das Gelenkachsenbauteil wird durch ein oberes und ein unteres Gegenlager in dem ersten Rastarm gehalten. Ein Rastelement, das von dem Bolzen durchdrungen wird, umfasst eine erste und eine zweite Rastfläche. Die erste Rastfläche ist drehfest mit einem der beiden Gegenlager und die zweite Rastfläche ist drehfest mit dem Lagerbock verbunden. Durch den Bolzen wird das Rastgelenk zusammengehalten. Bei dem Rastgelenk nach der GB 658,679 A ist die erste Rastfläche fest und damit auch drehfest mit dem Gegenlager verbunden.

Nachteilig bei dem Rastgelenk nach der EP 0 527 455 B1 bzw. der GB 658,679 A ist die vergleichsweise komplexe Konstruktion.

Ausgehend von der GB 658,679 A ist es Aufgabe der vorliegenden Erfindung ein Rastgelenk anzugeben, das einen einfacheren bzw. weniger Bauteile aufweist. Weiter ist es Aufgabe der vorliegenden Erfindung einen Außenspiegel mit einem solchen Rastgelenk anzugeben.

Die Lösung dieser Aufgabe erfolgt durch die Merkmale des Anspruchs 1 bzw. 15.

Dadurch, dass das Gelenkachsenbauteil durch den wenigstens und einer damit zusammen wirkenden Druckfeder gebildet wird, erübrigt sich ein das Rastgelenk zusammenhaltender Bolzen.

Die vorteilhaften Ausgestaltungen der Erfindung nach Anspruch 3 und 4 stellt eine einfache Ausgestaltung des Lagerbocks mit oben und unten offener Hülse dar, wobei der wenigstens eine Rastkörper in montiertem Zustand teilweise aus der Hülse heraus und in das zugeordnete Gegenlager hineinragt.

Die vorteilhaften Ausgestaltungen nach Anspruch 5 bzw. 6 bedingen durch ihren symmetrischen Aufbau eine gleichmäßige Kräfteverteilung.

Durch die vorteilhafte Ausgestaltung der Erfindung nach Anspruch 7 wird ein stabiles Gelenkachsenbauteil bereit gestellt.

Durch die vorteilhafte Ausgestaltung der Erfindung nach Anspruch 8 wird auf einfache Weise die Drehfestigkeit der Rastkörper gegenüber dem Lagerbock bereit gestellt.

Gemäß einer vorteilhaften Ausgestaltung der Erfindung nach Anspruch 10 erstrecken sich die einander zugeordneten Rastflächen im wesentlichen radial zu der Rastgelenkachse. Hierdurch werden die einander zugeordneten Rastflachen durch die Druckfeder aufeinander gedrückt, wodurch die Rastfunktion bereitgestellt wird.

Durch die vorteilhaften Ausgestaltungen der Erfindung 12 bis 14 ist eine einfache Montage und Demontage des Rastgelenks möglich.

Die übrigen Unteransprüche beziehen sich auf weitere vorteilhafte Ausgestaltungen der Erfindung. Weitere Einzelheiten, Merkmale und Vorteile der Erfindung ergeben sich aus der nachfolgenden Beschreibung einer beispielhaften Ausführungsform anhand der Zeichnung.

Es zeigt:
- Fig. 1: eine perspektivische Darstellung einer beispielhaften Ausführungsform der Erfindung
- Fig. 2: eine Explosionsdarstellung der beispielhaften Ausführungsform,
- Fig. 3: ein Ansicht der beispielhaften Ausführungsform von oben;
- Fig. 4: eine Schnittdarstellung entlang der Ebene A-A in Fig. 3,
- Fig. 5: eine perspektivische Detaildarstellung des Gelenkachsenbauteils,
- Fig. 6: eine Darstellung des zusammengebauten Rastgelenks, wobei die Rastkörper in die Gegenlager eingreifen, und
- Fig. 7: eine Fig. 6. entsprechende Darstellung, wobei die beiden Rastkörper durch ein Werkzeug zusammengedrückt werden.

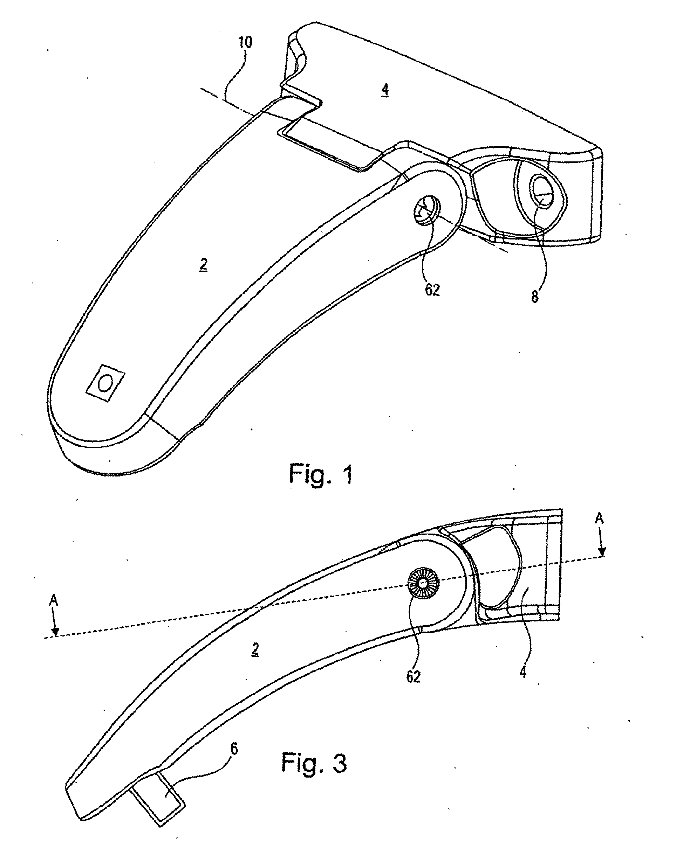

Die Figuren 1 bis 7 zeigen verschiedene Ansichten einer beispielhaften Ausführungsform des Rastgelenks gemäß der vorliegenden Erfindung. Das Rastgelenk weist einen ersten Rastarm 2 und einen zweiten Rastarm 4 auf. An dem ersten Rastarm 2 kann an einem Spiegelbefestigungsteil 6 ein Spiegelkopf (nicht dargestellt) mit einer oder mehreren Spiegelscheiben befestigt werden. Der zweite Rastarm 4 kann mittels Schraubbohrungen 8 an einem Fahrzeug befestigt werden.

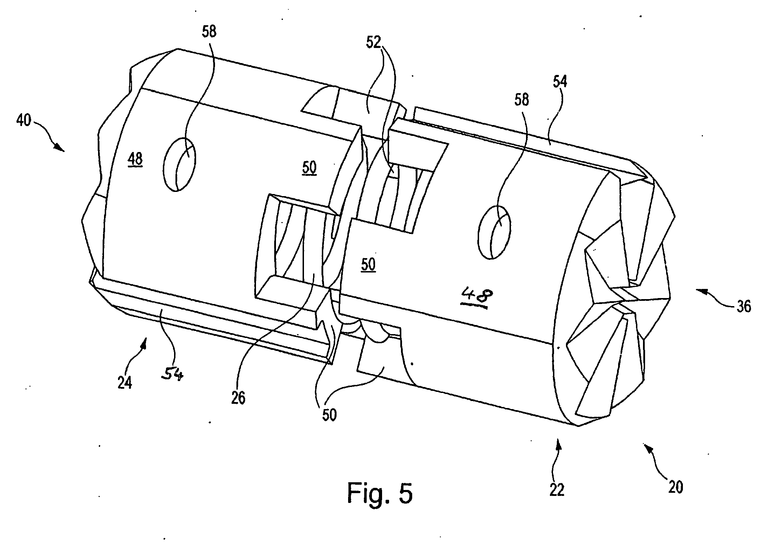

Die beiden Rastarme 2 und 4 sind um eine Rastgelenkachse 10 gegeneinander verschwenkbar. Der zweite Rastarm 4 umfasst einen Lagerbock 12, der eine Hülse 14 mit einer oberen Öffnung 16 und einer unteren Öffnung 18 umfasst. Der Lagerbock 12 bzw. die Hülse 14 werden von einem Gelenkachsenbauteil 20 durchsetzt. Das Gelenkachsenbauteil 20 wird zentral von der Rastgelenkachse 10 durchsetzt. Das Gelenkachsenbauteil 20 umfasst einen oberen Rastkörper 22 und einen unteren Rastkörper 24. zwischen den beiden Rastkörpern ist eine Spiraldruckfeder 26 mit einem oberen Ende 28 und einem unteren Ende 29 angeordnet. Fig. 5 zeigt eine Detaildarstellung des Gelenkachsenbauteils 20.

Der erste Rastarm 2 ist an seinem dem zweiten Rastarm 4 zugewandten Ende u-förmig ausgebildet und weist am Ende der beiden U-Schenkel ein oberes Gegenlager 30 und eine unteres Gegenlager 32 auf. Die beiden Gegenlager 30 und 32 sind becher- bzw. topfförmig und ihre offenen Seiten sind spiegelbildlich einander zugewandt. Auf der Innenseite des oberen Gegenlagers 30 ist eine erste Rastfläche 34 vorgesehen. Außen auf der Stirnseite des oberen Rastkörpers 22 ist eine zweite Rastfläche 36 angeordnet. Die erste und die zweite Rastfläche 34 und 36 bilden ein erstes Rastelement 38. Außen auf der Stirnseite des unteren Rastkörpers 24 ist eine dritte Rastfläche 40 angeordnet. Auf der Innenseite des unteren Gegenlagers 32 ist eine vierte Rastfläche 42 vorgesehen. Die dritte und die vierte Rastfläche 40 und 42 bilden ein zweites Rastelement 44. Die beiden Gegenlager 30 und 32 übergreifen in montiertem Zustand die obere und die untere Öffnung 16 und 18 in der Hülse 14.

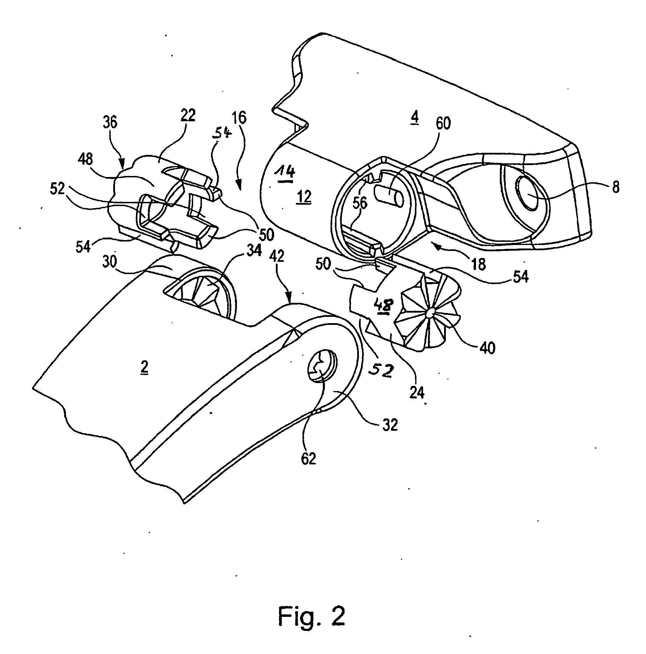

Wie insbesondere die Figuren 2 und 5 zeigen, sind die beiden Rastkörper 22 und 24 kappen- bzw. becherförmig und umfassen je einen Rastkörperboden 46 und eine Rastkörperseitenwand 48. Die beiden Rastkörper 22 und 24 weisen in radialer Richtung zu der Rastgelenkachse 10 einen kreisförmigen Querschnitt auf. In axialer Fortsetzung der Rastkörperseitenwand 48 erstrecken sich in axialer Richtung fingerförmige Fortsätze 50 mit Einschnitten bzw. Ausnehmungen 52 dazwischen. Der Innendurchmesser der kappenförmigen Rastkörper 22 und 24 ist so gewählt, dass er etwas größer ist als der Außendurchmesser der zylindrischen Spiraldruckfeder 26. Damit überdeckt der obere Rastkörper 22 das obere Ende 28 und der untere Rastkörper 24 das untere Ende 29 der Spiraldruckfeder 26. Die beiden Rastkörper 22 und 24 stützen sich damit auf der Spiraldruckfeder 26 ab und die Spiraldruckfeder presst in montiertem Zustand die zweite Rastfläche 36 gegen die erste Rastfläche 34 und die dritte Rastfläche 40 gegen die vierte Rastfläche 42. Der Außendurchmesser der beiden Rastkörper ist etwas größer als der Innendurchmesser der Hülse 24, so dass das Gelenkachsenbauteil 20 mit den beiden Rastkörpern 22 und 24 gerade in die Hülse 14 einschiebbar ist. Jeder der beiden Rastkörper 22 und 24 weist zwei längs bzw. in axialer Richtung verlaufende an den Rastkörpern 22, 24 gegenüberliegend angeordnete Nuten 54 auf. Diese Nuten 54 greifen in zwei entsprechende Vorsprünge 56 in der Hülse 14 ein. Die Nuten 55 bilden zusammen mit den Vorsprüngen 56 eine Nut- und Federverbindung. Durch diese Nut-und Federverbindung wird die Drehfestigkeit der beiden Rastkörper 22 und 24 gegenüber dem zweiten Rastarm 4 gewährleistet.

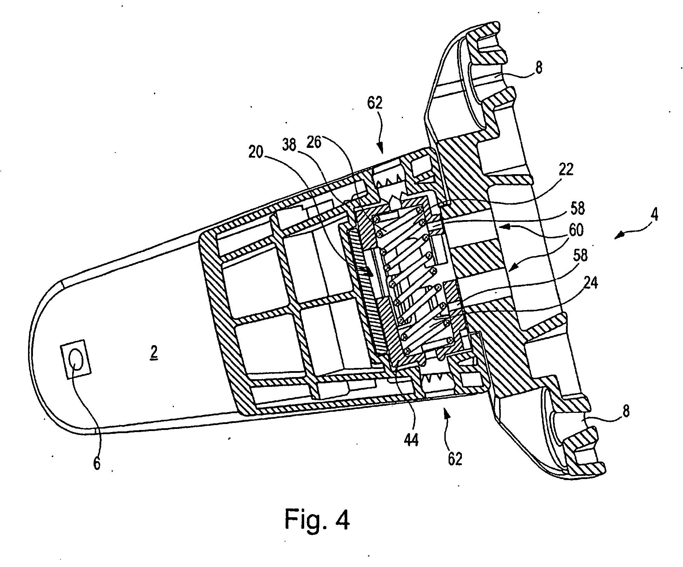

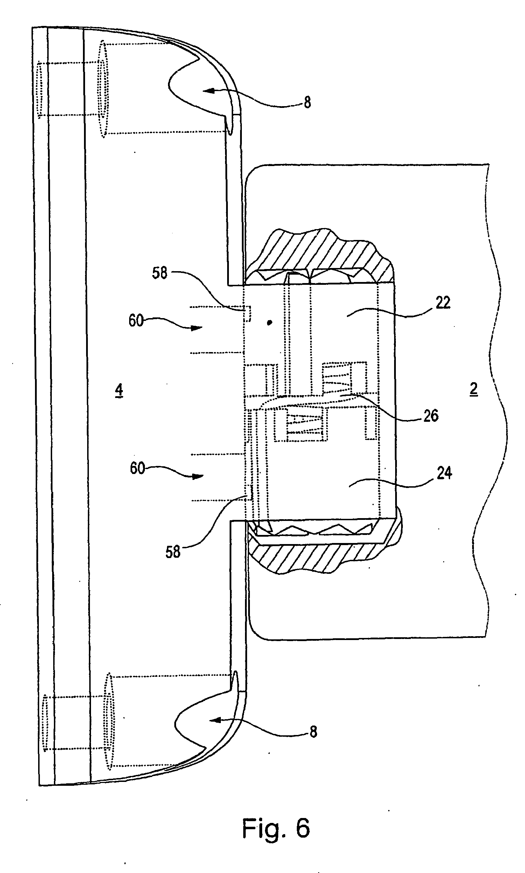

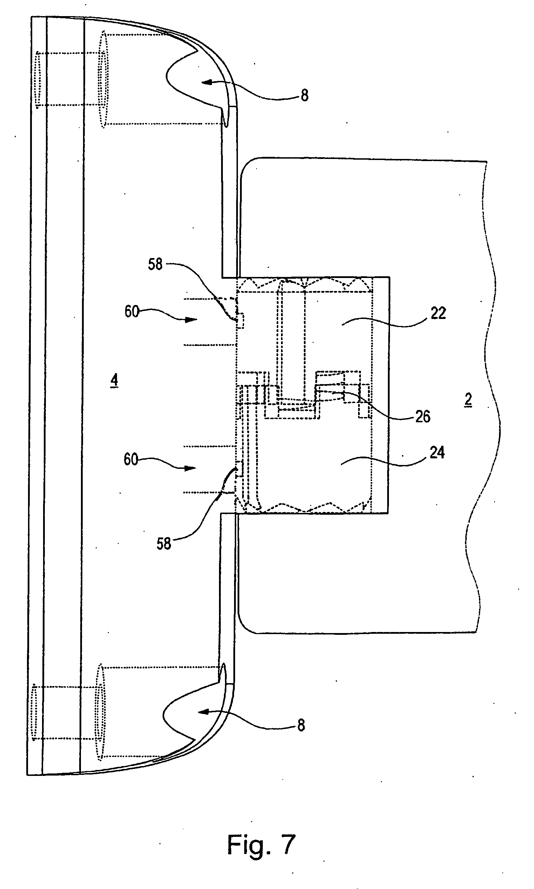

Fig. 6 zeigt das Rastgelenk in zusammengebauten Zustand bei dem die beiden Rastkörper 22 und 24 in die beiden Gegenlager 30 und 32 eingreifen, so dass das Gelenkachsenbauteil 20 die beiden Rastarme 2 und 4 miteinander verbindet. Zur Montage und Demontage des Rastgelenks müssen die beiden Rastkörper 22 und 24 gegen die Kraft der Spiraldruckfeder 26 zusammengedrückt werden. Hierzu weisen die beiden Rastkörper 22 und 24 einander gegenüberliegende Haltebohrungen 58 auf, wie dies aus Fig. 5 zu ersehen ist. Wie insbesondere aus Fig. 4 zu ersehen ist, kommen diese beiden Haltebohrungen 58 im montierten Zustand über zwei Langlöchern 60 zu liegen, die in den zweiten Haltearm 2 bzw. im Lagerbock 12 und in Hülse 14 eingebracht sind. Über ein zangenartiges Werkzeug wird von der Fahrzeugseite des zweiten Rastarms 4 durch die Langlöcher 60 in die Haltebohrungen 58 eingegriffen und die beiden Rastkörper können gegen die Druckkraft der Spiraldruckfeder 26 zusammengedrückt werden, so dass das Gelenkachsenbauteil 20 nicht mehr in die beiden Gegenlager 30 und 32 eingreift, wie dies in Fig. 7 dargestellt ist.

Auf der Außenseite der beiden Gegenlager 30 und 32 ist jeweils bezüglich der Rastgelenkachse 10 mittig angeordnete Montageöffnung 62 vorgesehen. Über diese Montageöffnungen 62 kann das erfindungsgemäßen Rastgelenk zusätzlich oder alternativ montiert und demontiert werden. Hierzu wird mittels einem zangenartigen Spezialwerkzeug in die Montageöffnungen 62 eingegriffen und die beiden Rastkörper 22 und 24 werden gegen die Druckkraft der Spiralfeder 26 zusammen gedrückt, so dass die beiden Rastkörper 22 und 24 nicht mehr in die beiden Gegenlager 30 und 32 eingreifen. Bezugszeichenliste:
- 2: erster Rastarm
- 4: zweiter Rastarm
- 6: Spiegelbefestigungsteil an 2
- 8: Schraubbohrungen in 4
- 10: Rastgelenkachse
- 12: Lagerbock
- 14: Hülse
- 16: obere Öffnung in 14
- 18: untere Öffnung in 14
- 20: Gelenkachsenbauteil
- 22: oberer Rastkörper
- 24: unterer Rastkörper
- 26: Spiraldruckfeder
- 28: oberes Ende von 26
- 29: unteres Ende von 26
- 30: oberes Gegenlager
- 32: unteres Gegenlager
- 34: erste Rastfläche
- 36: zweite Rastfläche
- 38: erstes Rastelement
- 40: dritte Rastfläche
- 42: vierte Rastfläche
- 44: zweites Rastelement
- 46: Rastkörperboden
- 48: Rastkörperseitenwand
- 50: fingerförmige Fortsätze
- 52: Ausnehmungen in 48
- 54: Nuten in 22, 24
- 56: Vorsprünge in 14
- 58: Haltebohrungen in 22, 24
- 60: Langlöcher in 4
- 62: Montageöffnung

## Patentansprüche

1. Rastgelenk, insbesondere für eine Halterung eines Außenspiegels für Nutzfahrzeuge, mit
einem ersten und einem zweiten Rastarm (2, 4), die um eine Rastgelenkachse (10) verschenkbar zueinander angeordnet und in wenigstens einer Position zueinander fixierbar sind,
einem Gelenkachsenbauteil (20) zum schwenkbaren Verbinden der beiden Rastarme (2, 4),
wobei der erste Rastarm (2) ein oberes und ein unteres Gegenlager (30, 32) für das Gelenkachsenbauteil (20) aufweist,
wobei der zweite Rastarm (4) einen Lagerbock (12) aufweist, der von dem Gelenkachsenbauteil (20) durchsetzt wird,
wenigstens einem ersten Rastelement (38), das eine erste und eine zweite Rastfläche (34, 36) aufweist, die einander zugewandt sind,
wobei die erste Rastfläche (34) fest und damit drehfest mit einem der beiden Gegenlager (30) angeordnet ist, und die zweite Rastfläche (36) drehfest mit dem Lagerbock (12) verbunden ist, und
wobei wenigstens eine der beiden Rastflächen (34, 36) entlang der Rastgelenkachse (10) verschiebbar ist,
und einer Druckfeder (26), die den Lagerbock (12) wenigstens teilweise durchsetzt,
**dadurch gekennzeichnet,**
**dass** das Gelenkachsenbauteil (20) wenigstens einen en Lagerblock (12) durchsetzenden Rastkörper (22, 24) umfasst,
**dass** auf dem wenigstens einen Rastkörper (22, 24) die zweite Rastfläche (36) angeordnet ist, und
**dass** die Druckfeder (26) zwischen dem wenigstens einen Rastkörper (22, 24) und dem anderen der beiden Gegenlager (32, 30) angeordnet ist.

2. Rastgelenk nach Anspruch 1, **dadurch gekennzeichnet, dass** das Gelenkachsenbauteil (20) die Druckfeder (26) umfasst.

3. Rastgelenk nach einem der vorhergehenden Ansprüche,
**dadurch gekennzeichnet,**
**dass** der Lagerbock (12) eine Hülse (14) mit einer oberen und einer unteren Öffnung (16, 18) aufweist,
**dass** das Gelenkachsenbauteil (20) die Hülse (14) durchsetzt, und dass in montiertem Zustand das obere Gegenlager (30) über der oberen Öffnung (16) und das untere Gegenlager (32) über der unteren Öffnung (18) der Hülse (14) angeordnet sind.

4. Rastgelenk nach Anspruch 3, **dadurch gekennzeichnet, dass** der wenigstens eine Rastkörper (22, 24) in montiertem Zustand teilweise aus der Hülse (14) in dem Lagerbock (12) herausragt.

5. Rastgelenk nach einem der vorhergehenden Ansprüche,
**dadurch gekennzeichnet,**
**dass** es ein zweites Rastelement (44) umfasst,
**dass** das zweite Rastelement (44) einen zweiten Rastkörper (24) mit einer dritten Rastfläche (40) umfasst,
**dass** das zweite Rastelement (44) eine der dritten Rastfläche (40) zugewandte vierten Rastfläche (42) umfasst,
**dass** die erste Rastfläche (34) an dem oberen Gegenlager (30) angeordnet ist,
**dass** die vierte Rastfläche (42) an dem unteren Gegenlager (32) angeordnet ist,
**dass** die Druckfeder (26) die beiden Rastkörper (30, 32) in entgegengesetzter Richtung auseinander und die zweite (36) auf die erste (34) und die dritte (40) auf die vierte Rastfläche (42) drückt, und
**dass** der zweite Rastkörper (24) Teil des Gelenkachsenbauteils (20) ist.

6. Rastgelenk nach einem der vorhergehenden Ansprüche,
**dadurch gekennzeichnet,**
**dass** das obere und das untere Gegenlager (30. 32) als topfförmige Öffnungen ausgebildet sind, die zentrisch zu der Rastgelenkachse (10) spiegelbildlich zueinander angeordnet sind, und
**dass** die beiden topfförmigen Öffnungen jeweils eine Bodenfläche aufweisen, auf der die erste bzw. vierte Rastfläche (34 bzw. 42) ausgebildet ist.

7. Rastgelenk nach einem der vorhergehenden Ansprüche, **dadurch gekennzeichnet, dass**
der erste und/oder der zweite Rastkörper (22, 24) als Kappe ausgebildet sind und jeweils eine Stirnseite und eine Seitenwand (48) aufweisen,
dass die kappenförmigen Rastkörper (22, 24) jeweils ein Ende (29, 29) der Druckfeder (26) umgreifen, und
dass jeweils auf der Stirnseite der kappenförmigen Rastkörper (22, 24) die zweite bzw. dritte Rastfläche (36 bzw. 40) ausgebildet ist.

8. Rastgelenk nach Anspruch 7, **dadurch gekennzeichnet, dass** an den Seitenwänden (48) der Rastkörper (22, 24) Nuten (54) und/oder Vorsprünge vorgesehen sind, die in entsprechende Vorsprünge (56) und/oder Nuten in dem Lagerbock (12) eingreifen, um die drehfeste Verbindung zwischen den Rastkörpern (22, 24) und dem Lagerbock (12) bereitzustellen.

9. Rastgelenk nach einem der vorhergehenden Ansprüche 5 bis 8, **dadurch gekennzeichnet, dass** die beiden Rastkörper (22, 24) in axialer Richtung sich aufeinander zu erstreckende Finger (50) aufweisen, die ineinander greifen.

10. Rastgelenk nach einem der vorhergehenden Ansprüche, **dadurch gekennzeichnet, dass** die Rastflächen (34, 36) sich in Bezug auf die Rastgelenkachse (10) in radialer Richtung erstrecken.

11. Rastgelenk nach einem der vorhergehenden Ansprüche, **dadurch gekennzeichnet, dass** die Druckfeder eine Spiraldruckfeder (26) ist oder aus einem Paket aus Tellerfedern besteht.

12. Rastgelenk nach einem der vorhergehenden Ansprüche 3 bis 11, **dadurch gekennzeichnet, dass** in dem Lagerbock (12) eine die Hülse (14) durchsetzende Montageöffnung (60) vorgesehen ist.

13. Rastgelenk nach Anspruch 12, **dadurch gekennzeichnet, dass** die Montageöffnung ein erstes und ein zweites sich in Richtung der Rastgelenkachse (10) erstreckendes und in Richtung der Rastgelenkachse (10) hintereinander angeordnete Langlöcher (60) aufweist.

14. Rastgelenk nach einem der vorhergehenden Ansprüche, **dadurch gekennzeichnet, dass** in dem oberen Gegenlager (30) eine obere (60) und in dem unteren Gegenlager (32) eine untere Montageöffnung (60) vorgesehen ist.

15. Außenspiegel für Fahrzeuge mit einem Rastgelenk nach einem der vorhergehenden Ansprüche, wobei an einem der beiden Rastarme (2 oder 4) ein Spiegel kopf montiert ist und wobei der andere Rastarm (4 oder 2) an dem Fahrzeug befestigbar ist.

## Claims

1. A retention hinge, in particular for a mount of an exterior rear view mirror for utility vehicles, including
a first and a second retaining arm (2, 4) arranged to be pivoted relative to each other about a retention hinge axle (10) and adapted to be immobilized relative to each other in at least one position,
a hinge axle component (20) for pivotally connecting the two retaining arms (2, 4), wherein the first retaining arm (2) comprises an upper and a lower bearing housing (30, 32) for the hinge axle component (20),
wherein the second retaining arm (4) comprises a bearing block (12) through which the hinge axle component (20) extends,
at least one first retaining element (38) having a first and a second retention surface (34, 36) facing each other,
wherein the first retention surface (34) is arranged fixedly and thus non-rotationally with one of the two bearing housings (30), and the second retention surface (36) is connected non-rotationally to the bearing block (12), and wherein at least one of the two retention surfaces (34, 36) is adapted to be displaced along the retention hinge axle (10),
and a compression spring (26) extending at least partly through the bearing block (12),
**characterized in that**
the hinge axle component (20) includes at least one retainer (22, 24) extending through the bearing block (12),
on the at least one retainer (22, 24) the second retention surface (36) is arranged, and
the compression spring (26) is arranged between the at least one retainer (22, 24) and the other one of the two bearing housings (32, 30).

2. The retention hinge according to claim 1, **characterized in that** the hinge axle component (20) includes the compression spring (26).

3. The retention hinge according to any one of the preceding claims,
**characterized in that**
the bearing block (12) comprises a sleeve (14) having an upper and a lower opening (16, 18),
the hinge axle component (20) extends through the sleeve (14), and
in the mounted condition, the upper bearing housing (30) is positioned above the upper opening (16), and the lower bearing housing (32) above the lower opening (18) of the sleeve (14).

4. The retention hinge according to claim 3, **characterized in that** in the mounted condition, the at least one retainer (22, 24) partly projects from the sleeve (14) in the bearing block (12).

5. The retention hinge according to any one of the preceding claims,
**characterized in that**
it includes a second retaining element (44),
the second retaining element (44) includes a second retainer (24) having a third retention surface (40),
the second retaining element (44) includes a fourth retention surface (42) facing the third retention surface (40),
the first retention surface (34) is arranged at the upper bearing housing (30), the fourth retention surface (42) is arranged at the lower bearing housing (32), the compression spring (26) pushes the two retainers (30, 32) apart in opposite directions and presses the second retention surface (36) onto the first retention surface (34) and the third retention surface (40) onto the fourth retention surface (42), and
the second retainer (24) is part of the hinge axle component (20)

6. The retention hinge according to any one of the preceding claims,
**characterized in that**
the upper and the lower bearing housing (30, 32) have the form of pot-shaped openings disposed centrically with respect to the retention hinge axle (10) and in mirror symmetry with each other, and
the two pot-shaped openings each have a bottom surface on which the first and the fourth retention surface (34 and 42, respectively) are formed.

7. The retention hinge according to any one of the preceding claims,
**characterized in that**
the first and/or second retainers (22, 24) have the form of a cap and each have an end face and a side wall (48),
the cap-type retainers (22, 24) each encompass one end (29), 29) of the compression spring (26), and
the second and the third retention surfaces (36 and 40, respectively) are formed on the end face of the respective cap-type retainer (22, 24).

8. The retention hinge according to claim 7, **characterized in that** grooves (54) and/or protrusions are provided at the side walls (48) of the retainers (22, 24), which engage corresponding protrusions (54) and/or grooves in the bearing block (12) so as to provide the non-rotational connection between the retainers (22, 24) and the bearing block (12).

9. The retention hinge according to any one of the preceding claims 5 to 8, **characterized in that** the two retainers (22, 24) comprise fingers (50) extending towards each other in an axial direction which mesh with each other.

10. The retention hinge according to any one of the preceding claims, **characterized in that** the retention surfaces (34, 36) extend in a radial direction relative to the retention hinge axle (10).

11. The retention hinge according to any one of the preceding claims, **characterized in that** the compression spring is a helical compression spring (26) or is comprised of a bundle of plate springs.

12. The retention hinge according to any one of the preceding claims 3 to 11, **characterized in that** a mounting bore (60) extending through the sleeve (14) is provided in the bearing block (12).

13. The retention hinge according to claim 12, **characterized in that** the mounting bore includes a first and a second oblong hole (60) extending in the direction of the retention hinge axle (10) and disposed successively in the direction of the retention hinge axle (10).

14. The retention hinge according to any one of the preceding claims, **characterized in that** an upper mounting bore (60) is provided in the upper bearing housing (30) and a lower mounting bore (60) is provided in the lower bearing housing (32).

15. An exterior rear view mirror for vehicles comprising a retention hinge according to any one of the preceding claims, wherein a mirror head is mounted on one of the two retaining arms (2 or 4), and wherein the other retaining arm (4 or 2) is adapted to be fastened to the vehicle.

## Revendications

1. Articulation à encliquetage, en particulier pour une fixation d'un rétroviseur extérieur pour véhicules utilitaires, avec :
un premier et un deuxième bras à encliquetage (2, 4), disposés de manière à pouvoir pivoter l'un par rapport à l'autre autour d'un axe d'articulation à encliquetage (10) et susceptibles d'être fixés l'un par rapport à l'autre en au moins une position,
un composant d'axe d'articulation (20), pour assurer la liaison pivotante des deux bras à encliquetage (2, 4),
le premier bras à encliquetage (2) présentant un contre-palier supérieur et un contre-palier inférieur (30, 32) pour le composant d'axe d'articulation (20),
le deuxième bras à encliquetage (4) présentant un bloc palier (12), traversé par le composant d'axe d'articulation (20),
au moins un premier élément à encliquetage (38), présentant une première et une deuxième face d'encliquetage (34, 36), tournée l'une vers l'autre,
la première face d'encliquetage (34) étant disposée de manière fixe et, ainsi, assujettie en rotation avec l'un (30) des deux contre-paliers, et la deuxième face d'encliquetage (36) étant reliée, de manière assujettie en rotation, au bloc palier (12), et
au moins l'une des deux faces d'encliquetage (34, 36) étant déplaçable le long de l'axe d'articulation à encliquetage (10),
et un ressort de compression (26), traversant au moins partiellement le bloc palier (12),
**caractérisée en ce que**
le composant d'axe d'articulation (20) comprend au moins un corps d'encliquetage (22, 24) traversant le bloc palier (12),
**en ce que** la deuxième face d'encliquetage (36) est disposée sur le au moins un corps d'encliquetage (22, 24), et
**en ce que** le ressort de compression est disposé entre le au moins un cors d'encliquetage (22, 24) et l'autre des deux contre-paliers (32, 30).

2. Articulation à encliquetage selon la revendication 1, **caractérisée en ce que** le composant d'axe d'articulation (20) entoure le ressort de compression (26).

3. Articulation à encliquetage selon l'une des revendications précédentes, **caractérisée en ce que**
le bloc palier (12) présente une douille (14) avec une ouverture supérieure et une ouverture inférieure (16, 18),
**en ce que** le composant d'axe d'articulation (20) traverse la douille (14), et
**en ce que**, à l'état monté, le contre-palier supérieur (30) est disposé au-dessus de l'ouverture supérieure (16) et le contre-palier inférieur (32) est disposé au-dessus de l'ouverture inférieure (18) de la douille (14).

4. Articulation à encliquetage selon la revendication 3, **caractérisée en ce que**, à l'état monté, le au moins un corps d'encliquetage (22, 24) ressort partiellement de la douille (14) dans le bloc palier (12).

5. Articulation à encliquetage selon l'une des revendications précédentes, **caractérisée en ce qu'**
il comprend un deuxième élément à encliquetage (44),
**en ce que** le deuxième élément à encliquetage (44) comprend un deuxième corps d'encliquetage (24) avec une troisième face d'encliquetage (40),
**en ce que** le deuxième élément à encliquetage (44) comprend une quatrième face d'encliquetage (42), tournée vers la troisième face d'encliquetage (40),
**en ce que** la première face d'encliquetage (34) est disposée sur le contre-palier supérieur (30),
**en ce que** la quatrième face d'encliquetage (42) est disposée surle contre-palier inférieur (32),
**en ce que** le ressort de compression (26) presse les deux corps d'encliquetage (30, 32) à l'écart l'un de l'autre dans un sens opposé, et presse la deuxième (36) face d'encliquetage sur la première (34) et la troisième (40) sur la quatrième (42), et
**en ce que** le deuxième corps d'encliquetage (24) fait partie du composant d'axe d'articulation (20).

6. Articulation à encliquetage selon l'une des revendications précédentes, **caractérisée en ce que**
le contre-palier supérieur et le contre-palier inférieur (30, 32) sont réalisés sous forme d'ouvertures en forme de pots, disposés de manière centrée par rapport à l'axe d'articulation à encliquetage (10), en répondant à une symétrie spéculaire l'un par rapport à l'autre, et
**en ce que** les deux ouvertures en forme de pots présentent chacune une face de fond, sur laquelle est réalisée la première, respectivement la quatrième face d'encliquetage (34, ou 42).

7. Articulation à encliquetage selon l'une des revendications précédentes, **caractérisée en ce que**
le premier et/ou le deuxième corps d'encliquetage 22, 24) est/sont réalisés sous forme de chapeau et présente(nt) chacun une face frontale et une paroi latérale (48),
les corps d'encliquetage (22, 24) en forme de chapeaux entourent chacun une extrémité (29, 29) du ressort de compression (26), et
**en ce que**, chaque fois, la deuxième respectivement la troisième face d'encliquetage (36, ou 40) est réalisée sur la face frontale des corps d'encliquetage (22, 24) en forme de chapeaux.

8. Articulation à encliquetage selon la revendication 7, **caractérisée en ce que**, sur les parois latérales (48) des corps d'encliquetage (22, 24) sont prévues des rainures (54) et/ou des saillies, s'engageant dans des saillies (56) et/ou des rainures correspondantes réalisées dans le bloc palier (12), de manière à fournir une liaison assujettie en rotation entre les corps d'encliquetage (222, 24) et le bloc palier (12).

9. Articulation à encliquetage selon l'une des revendications 5 à 8 précédentes, **caractérisée en ce que** les deux corps d'encliquetage (22, 24) présentent des doigts (50) s'étendant les uns vers les autres en direction axiale, s'engageant les uns dans les autres.

10. Articulation à encliquetage selon l'une des revendications précédentes, **caractérisée en ce que** les faces d'encliquetage (34, 36) s'étendent en direction radiale par rapport à l'axe d'articulation à encliquetage (10).

11. Articulation à encliquetage selon l'une des revendications précédentes, **caractérisée en ce que** le ressort de compression est un ressort de compression hélicoïdal (26) ou est composé d'un paquet de ressorts à disques.

12. Articulation à encliquetage selon l'une des revendications précédentes, **caractérisée en ce qu'**une ouverture de montage (60), traversant la douille (14), est prévue dans le bloc palier (12).

13. Articulation à encliquetage selon la revendication 12, **caractérisée en ce que** l'ouverture de montage présente un premier et un deuxième trous oblongs (60), s'étendant en direction de l'axe d'articulation à encliquetage (10) et disposés l'un derrière l'autre en direction de l'axe d'articulation à encliquetage (10).

14. Articulation à encliquetage selon l'une des revendications précédentes, **caractérisée en ce qu'**une ouverture de montage supérieure (60) est prévue dans le contre-palier supérieur (30) et une ouverture de montage inférieure (60) est prévue dans le contre-palier inférieur (32).

15. Rétroviseur extérieur pour véhicules, avec une articulation à encliquetage selon l'une des revendications précédentes, une tête de miroir étant montée sur l'un des deux bras à encliquetage (2 ou 4) et l'autre bras à encliquetage (4 ou 2) étant susceptible d'être fixé au véhicule.
